Europäisches Patentamt

European Patent Office

Office européen des brevets

(19)

(11) **EP 0 973 960 B1**

(12) **EUROPÄISCHE PATENTSCHRIFT**

(45) Veröffentlichungstag und Bekanntmachung des Hinweises auf die Patenterteilung:
**24.07.2002 Patentblatt 2002/30**

(51) Int Cl.[7]: **C25D 7/00**, B29C 33/56

(21) Anmeldenummer: **98912489.6**

(86) Internationale Anmeldenummer:
**PCT/EP98/01602**

(22) Anmeldetag: **19.03.1998**

(87) Internationale Veröffentlichungsnummer:
**WO 98/44171 (08.10.1998 Gazette 1998/40)**

(54) **VERFAHREN ZUM HERSTELLEN EINES FORMSCHAUMTEILS**

METHOD FOR PRODUCING FOAMED SHAPED PARTS

PROCEDE POUR PRODUIRE DES PIECES EN MOUSSE MOULEE

(84) Benannte Vertragsstaaten:
**CH DE FR GB IT LI**

(30) Priorität: **02.04.1997 DE 19713566**

(43) Veröffentlichungstag der Anmeldung:
**26.01.2000 Patentblatt 2000/04**

(60) Teilanmeldung:
**01113491.3 / 1 154 045**

(73) Patentinhaber: **DaimlerChrysler AG**
**70567 Stuttgart (DE)**

(72) Erfinder:
- **UNGEHEUER, Heinz-Günter**
  **D-76344 Eggenstein (DE)**
- **HENNEL, Paul**
  **D-93173 Wenzenbach (DE)**

(56) Entgegenhaltungen:
**EP-A- 0 374 080**      **WO-A-94/13864**

- **PATENT ABSTRACTS OF JAPAN vol. 011, no. 234 (M-611), 30. Juli 1987 & JP 62 044410 A (HITACHI TOKYO ELECTRON CO LTD;OTHERS: 01), 26. Februar 1987**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 973 960 B1

**Beschreibung**

Die Erfindung betrifft ein Verfahren zum Herstellen eines Formschaumteils nach Anspruch 1.

Formschaumteile haften an den Formwerkzeugen, in denen sie hergestellt werden, wodurch sich die Entnahme der Formschaumteile stark erschwert bzw. unmöglich gemacht wird.

Es gibt verschiedene Ansätze zur Lösung dieses Problems, die im folgenden kurz beschrieben werden sollen.

Aus der JP-A-62 044 410 ist es bekannt, im Anschluß an das Formgebungsverfahren an der Oberfläche der Außenseite eines Formwerkzeuges haftende Kunststoffreste zu entfernen, indem ionisierte Luft auf die Oberfläche geblasen wird, so daß die Kunststoffreste einfach entfernt werden können. Es wird aber nichts darüber ausgesagt, auf welche Weise das Anhaften des Förmschaumteils im Formwerkzeug selbst von vornherein verhindert werden kann.

Aus "Polyurethane", Kunststoff Handbuch 7, 3. Auflage 1993, S. 362-363, Hanser Verlag ist es bekannt, zur Verbesserung der Oberflächenqualität von Formwerkzeugen eine chemische Vernickelung oder eine andere Hartbeschichtung des Formwerkzeuges vorzunehmen. Weiterhin wird dargelegt, daß die Anwendung von Formwerkzeugen aus Galvano-Nickel mit Hinterfütterung aus Aluminium oder hochgefüllten Gießharzen wegen der unterschiedlichen Ausdehnungskoeffizienten der eingesetzten Werkstoffe eingeschränkt ist. Aus dem "Taschenbuch für Galvanotechnik", Band 1, S. 222-259, LPW ist zu entnehmen, daß ein besserer Korrosionsschutz als der durch eine Hartverchromung dadurch erreicht werden kann, daß vor dem eigentlichen Hartverchromen ein ausreichend dicker Zwischenüberzug aus extrem duktilen Halbglanznickel aufgebracht wird.

Eine weitere Möglichkeit zur Verbesserung des Trennverhaltens besteht darin, den Komponenten zur Bildung des Schaumteiles ein inneres Trennmittel beizugeben. Eine derartige Vorgehensweise ist beispielsweise in der DE-C-38 37 351 beschrieben. Dort wird bei der Herstellung von Polyurethan- bzw. Polyharnstoffkörpern flüssiges Polybutadien der Polyol- bzw. der Polyaminkomponente beigegeben. Eine weitere Darstellung dieser Vorgehensweise findet sich auch in "Innere Trennmittel für Polyurethan-Systeme", P. Horn, H.-U. Schmidt und G. Ramlow, Kunststoffberater 10/1987, S. 24-26.

Alternativ zu dieser Vorgehensweise kann auch ein Trennmittel auf die Oberfläche des Formwerkzeuges aufgetragen werden. Diese Vorgehensweise wird beispielsweise in der DE-A-1 131 873 beschrieben, wo bei der Herstellung von Polyurethanschaumstoffkörpern mit Isocyanatgruppen reagierende Stoffe im Überschuß auf das Formwerkzeug aufgetragen werden. Auch in der DE-C-38 27 595 wird dargelegt, daß zur Verbesserung der Entformungseigenschaften die Innenwände der verwendeten Form gegebenenfalls mit bekannten äußeren Formtrennmitteln beaufschlagt/beschichtet werden.

Die Nachteile einer der Verwendung innerer oder äußerer Trennmittel sind, daß diese Trennmittel gesundheits- und umweltschädlich sind, die Produktionskosten für Formschaumteile erhöhen und zudem das Ein- bzw. Aufbringen der Trennmittel den Produktionsprozeß verlangsamt. Hinzu kommt, daß die Trennmittel die Eigenschaften des Formschaumes beeinflussen können. Bisher konnte jedoch noch nicht vollständig auf Trennmittel ganz verzichtet werden.

Aufgabe der Erfindung ist es, ein Verfahren zur Herstellung eines Formschaumteils bereitzustellen, bei dem keine Trennmittel under erforderlich sind.

Als Antihaftbeschichtung werden die formgebenden Oberflächen des Formwerkzeuges mit einer Galvanoschicht auf Chrombasis versehen wobei Mittel zum Erzeugen eines Stromes eines ionisierten Gases oder Gasgemisches und Mittel zum Einbringen und Einblasen des Gases oder Gasgemisches in das Formwerkzeug vorgesehen sind.

Weitere Vorteile der Erfindung bestehen darin, daß eine stabile, definierte Hautausbildung an der Schaumteil-Oberfläche ermöglicht wird. Da auf Trennmittel generell verzichtet werden kann, benötigt man keine technischen Einrichtungen wie Sprühund Absauganlagen oder Éntsorgungsanlagen. Es gibt keine Trennmittelrückstände an der Oberfläche der Formschaumteile. Ferner wird Aufbringzeit gespart, Kosten werden vermieden und generell werden Mensch und Umwelt geschont.

Vorteilhafte Weiterbildungen ergeben sich aus den Unteransprüchen. Bspw. kann als ionisierte Gasgemisch positiv aufgeladene Luft von ca. 30 bis 90 °C ist, die mit ca. 4 bis 6 bar in das Formwerkzeug eingeblasen wird. Ferner können zur Erleichterung des Ladungsaustausches entweder das Gas bzw. das Gasgemisch oder die Komponenten für die Formschaumteilbildung mit einem Dielektrikum angereichert werden.

Eine vorteilhafte Weiterbildung der erfindungsgemäßen Vorrichtung sieht vor, daß die Galvanoschicht aus Chrom VI mit Spuren von Chrom III, Ferrit und Zink besteht. Die Dicke der Galvanoschicht beträgt vorzugsweise zwischen 40 µm und 0,1 mm. Die Galvanoschicht kann in vorteilhafter Weise auf einer chemischen Übergangsschicht aus Nickel mit einem Kupferanteil von 1 bis 15 % aufgebracht werden, wobei die Dicke der Übergangsschicht zwischen 35 und 55 µm betragen kann.

Eine vorteilhafte Weiterbildung des erfindungsgemäßen Verfahrens zur Herstellung eines Formwerkzeuges sieht vor, daß bei Formwerkzeugen aus Kunststoff zunächst eine elektrisch leitende Trägerschicht aufgebracht wird.

Im folgenden werden Ausführungsbeispiele der Erfindung anhand von Zeichnungen beschrieben. Es zeigen

Fig. 1 eine schematische Darstellung einer erfindungsgemäßen Vorrichtung bei einem geschlossenen Formwerkzeug,

Fig. 2 eine schematische Darstellung einer erfindungsgemäßen Vorrichtung bei einem offenen Formwerkzeug,

Fig. 3 eine schematische Darstellung des Abstoßeffektes,

Fig. 4 eine schematische Darstellung des Verlaufes des E-Potentiales über der Zeit für eine Schäumung,

Fig. 5 eine schematische Darstellung der Wirkung der Flachspannung.

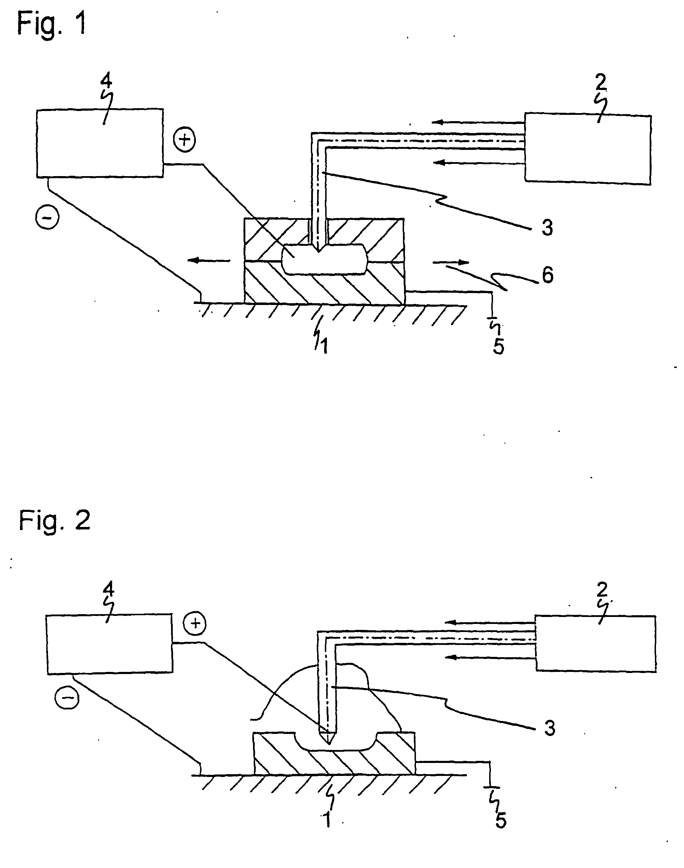

In den Fig. 1 und 2 liegt ein geschlossenes (Fig. 1) oder ein offenes (Fig. 2) Formwerkzeug 1 vor. Eine Luftaufbereitungseinheit 2 zum erzeugen ionisierten Gases, hier ionisierter Luft, ist über eine Einblassonde 3 mit mit dem Formwerkzeug 1 verbunden, so daß über die Einblassonde 3 ionisierte Luft und gegebenenfalls auch Dielektrikum in das Formwerkzeug 1 geleitet werden kann. Der Pluspol einer Hochspannungseinheit 4 ist bei Fig. 1 mit dem Innenbereich des Formwerkzeuges 1, bei Fig. 2 mit dem Ende der Einblassonde 3 verbunden. Der Minuspol der Hochspannungseinheit 4 ist geerdet, ebenso verfügt das Formwerkzeug 1 jeweils über eine Erdung 5. Bei dem Formwerkzeug gemäß Fig. 1 sind zusätzlich Entlüftungen 6 vorgesehen. Bei Formwerkwerkzeugen aus metallischen Werkstoffen wird die erfindungsgemäße Beschichtung wie folgt aufgebracht:

Nach dem Reinigen der Formoberfläche und, falls erforderlich, dem Glätten der Formoberfläche im Kristallbereich bzw. im Mikrobereich, das durch Polieren, jedoch ohne chemische Poliermittel, erfolgen kann, liegen die folgenden Oberflächenqualitäten vor:

- glänzend (mechanisch ohne Poliermittel poliert)
- matt (elektrolytisch poliert mit anschließendem Glaskugelstrahlen)
- Struktur (elektropoliert).

Anschließend werden die nicht zu beschichtenden Korpusstellen mit Speziallack abgedeckt.

Das Formwerkzeug wird anschließend chemisch oder elektrochemisch beaufschlagt oder - insbesondere bei hohem Siliziumgehalt des Formwerkzeuges - mechanisch bearbeitet.

Beispielsweise wird eine chemische Übergangsschicht aus Nickel mit einem Kupferanteil von 0 bis 15 % im Säuretauchbad aufgebracht. Die Dicke der chemischen Übergangsschicht beträgt vorzugsweise ca. 35 bis 55 µm.

Auf die Übergangsschicht wird anschließend eine Galvanoschicht, die auch als chemische Lastschicht bezeichnet werden kann, in einem Säurebad, beispielsweise einem 2 %igen Schwefelsäurebad aufgebracht. Die Galvanoschicht besteht vorzugsweise aus Chrom VI mit Spuren von Chrom III, Ferrit mit ca. 0,5 % und Zink. Sie weist eine Gesamtdicke von ca. 40 µm-0,1 mm auf. Sie kann beispielsweise aus drei Unterschichten bestehen, wobei zunächst eine Grundschicht von ca. 30 µm mit schwacher Stromdichte aufgewirbelt wird.

Auf diese Grundschicht wird eine Tragschicht von ca. 5 bis 50 µ m Dicke aufgebracht, wobei mit stärkerer Stromdichte als bei der Grundschicht gearbeitet wird, jedoch die Auskristallisationsgeschwindigkeit durch ein schnelleres Verfahren der Anode kontrolliert wird. Schließlich wir auf die Tragschicht eine Last- oder Vektorschicht durch Verschiebung der Achsenrichtung der Hauptkristallaufbauten bzw. Zonen im Bereich zwischen 15 ° bis 60 ° (Richtung) entgegen der Flachnormalvektorschicht fertig aufgebaut.

Die Dicke der Vektorschicht liegt zwischen 5 und 15 µm und wird durch +/- Umpolungen und Stromdichtenverminderung als passivierte Abschlußschicht aufgebracht, wofür folgende Voraussetzungen gegeben sein müssen:

- Kristallstruktur mikroporig
- gleichmäßige Schichtdicke in den Richtungen der Hauptflächenderivaten +/- 10 m
- die Zusatzanode der Galvanorichtung muß strömungstechnisch berechnet werden (der Elektrodenabstand von 12 mm als Rastermaß ist bei der Netzbleielektrode einzuhalten)

Die Stromstärke, Spannung, Gleichstrom- und Elektrolytqualität analog Hartverchromung müssen wie genormt berechnet werden. Anschließend werden eventuell vorliegende Restkristalle durch Überschleifen entfernt und das Formwerkzeug kann zusammengebaut werden. Es wird eine hohe Oberflächenhärte von ca. 1200 Vickers erreicht, wodurch eine praktisch unbegrenzte Lebensdauer erreichbar ist.

Bei Formwerkzeugen aus Kunststoffen (z.B. Epoxid-Harz) ist die Vorgehensweise im Prinzip gleich, jedoch wird hier zunächst auf das Formwerkzeug eine elektrisch leitende Trägerschicht aufgetragen, die beispielsweise aus Epoxidlack oder Metallack bestehen kann und eine Dicke von beispielsweise 0,2 mm aufweisen kann.

Die Beschichtung zeichnet sich durch eine sehr dichte Kristallstruktur an der der Oberfläche aus. Zusätzlich werden die Moleküle des Schaumstoffes entlang der Oberflächen des Formwerkzeuges so angeregt, daß sie nicht in die Kristallstruktur der Beschichtung eindringen können. Diese Anregung muß so lange aufrechterhalten bleiben, bis möglichst alle chemischen Reaktionen während des Schäumungsprozesses abgeschlossen sind. Durch unterschiedliche pH-Werte und unterschiedliche Wassergehalte der verschiedenen Schäumsysteme wird Energie abgebaut. Verursacher dieses Abbaus sind die in Schwingung geratenen Polyurethan-Moleküle an der Nestwand während des Ablaufes des chemischen Prozesses zur Aushärtung des Polyurethans. Diese in dem Formwerkzeug während der chemischen Reaktionen allmählich abgebaute Energie muß für einen störungsfreien Schäumbetrieb ständig ersetzt werden.

Mittels Flachspannung wird entlang der Oberfläche des Formwerkzeuges ein steuerbarer "Abstoßeffekt" erzielt. Bei einer Oberflächentemperatur des Formwerkzeuges von 25 °C spricht das E-lektrodenpotential bereits bei -0,7 E-Volt in Ausgangsphase incl. der eingesetzten Blasluft an. Um in der Serienfertigung eine leichte Entformbarkeit der geschäumten Teile zu gewährleisten, ist es wichtig, das E-Potential im Formnest aufrechtzuerhalten.

Das ursprüngliche Potential der Beschichtung im Formnest wird nach der ersten Schäumung nicht unbedingt, aber meistens vermindert. Diese Verminderung ist ein Energieverlust.

Ist ein bestimmtes Maß an Verlust erreicht, muß, um den Abstoßeffekt aufrechtzuerhalten, die verminderte Energie aufgebaut werden.

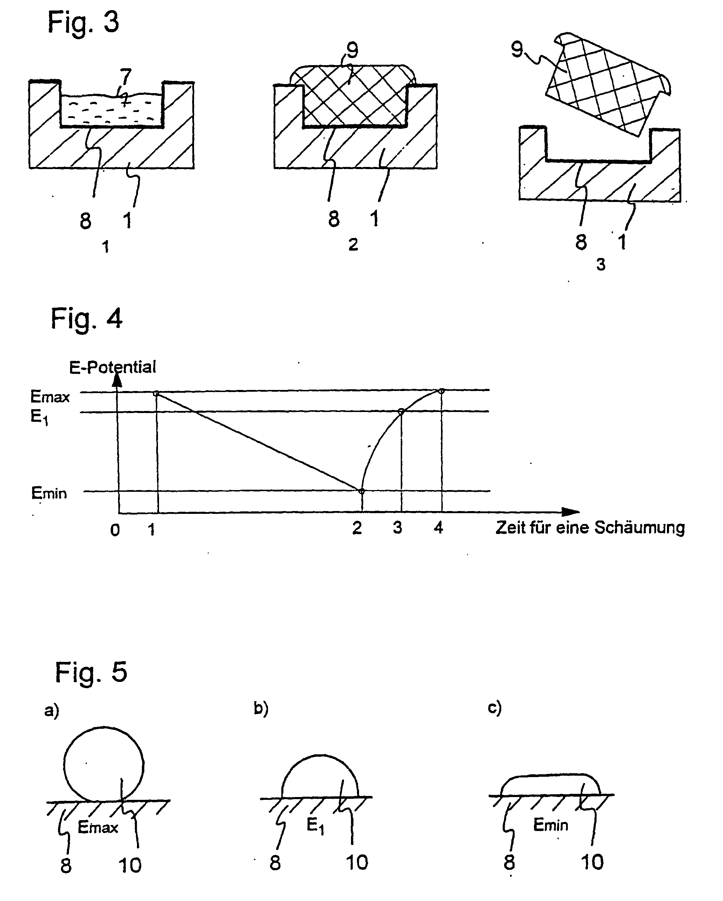

Fig. 3 zeigt die Funktion des Abstoßeffektes und Fig. 4 den Verlauf des E-Potentials über der Zeit für eine Schäumung, wobei jeweils der Schäumungsvorgang in einzelne Phasen eingeteilt ist. In Phase 1 (0-1 bei Fig. 4) werden die flüssigen Polyurethankomponenten 7 in ein Formwerkzeug 1 mit einer Beschichtung 8 eingespritzt, in Phase 2 (1-2 be'i Fig. 4) läuft der chemische Prozeß (die Reaktion) ab, in Phase 3 (2-3 bei Fig. 4) wird das geschäumte Teil 9 entnommen und anschließend (in Fig. 3 nicht dargestellt, in Fig. 4: 3-4) erfolgt ein externer Aufbau des E-Potentials der Beschichtung, z.B. durch Reibung oder durch ionisierte Luft), wobei folgende Definitionen gelten:

$$E_{max} \text{ minus } E_1 = E_{Verlust} \text{ bzw. } E_v \text{ und } E_{max} - E_{min} = [A]$$

$E_1$:  E-Potential nach der ersten Schäumung
$E_1$ minus $E_{min} = E_{zurück}$ bzw. $E_z$; $E_1 = E_z + E_{min}$

$$E_v = E_{max} - (E_z + E_{min})$$

Wobei

$E_{min}$:  E-Potentialabbau durch chemischen Prozeß des PU-Schaumes
$E_z$:  E-Potentialaufbau durch Teilentnahme (interner E-Poten tialaufbau)

also:  wenn Limes $E_z$ (t) >> A und $E_z$ = [A] 2, 3 bzw.
$E_z = E_{max} - E_{min}$, dann entfällt Phase 3-4.

Nach dem Ablauf der chemischen Reaktion ist es möglich, die Außenhaut des Polyurethananteils elektrostatisch aufzuladen.

Bei der Entformung des geschäumten Teils entsteht entlang der Formenbeschichtung ein negatives E-Potential. Dieses E-Potential wiederum wird über die bei der Teilentnahme eingeführte kinetische Energie auf die Außenhaut des Schaumteils übertragen. Die Schaumteiloberfläche wird sofort nach der Trennung von der Formnestbeschichtung positiv aufgeladen und parallel durch die weitere Entfernung der Beschichtung ihr E-Potential negativ aufgebaut.

Festzustellen ist, daß das Schaumteil bei der Entformung eine gewisse elektrische Ladung enthält; jedoch wäre mit Trennmittel diese Ladung noch größer (Funkenflug).

Weiter ist es wichtig zu wissen, daß bei den E-Potential-Operationen nur die Komponenten berücksichtigt sind, die die sogenannten Flächenspannungen beeinflussen. Diese Operationen sind immer die Derivaten, bei welchen die Richtung des Normalvektors parallel und gegenzeigend zu der Hauptrichtung in der chemischen Reaktion des Polyurethananteils verläuft. Diese eine Richtung zeigt meistens in das Massenzentrum des Teils.

Das Potentialverhältnis kann man nach Poisson so beschreiben:

$$E_{max} = Eu_{max}$$

Eu hier dann $\underline{U}$(r) als Potential

V(r) = die Vektorschicht in dem Formnest somit

$$Vx = \frac{\partial u}{\partial x}, \ Vy = \frac{\partial u}{\partial y}, \ Vz = \frac{\partial x}{\partial z} \rightarrow U \ (r) \ \text{Potential}$$

für $\underline{V}(r)$
Vdr = (grad U) dr = dU
somit        Vdr = dU = U(b) - U(a), wenn a = a(ro) und b = b(r) a→b a→b

$$\text{dann } U(r) - U(ro) = \int_{ro}^{r} V \, dr \rightarrow U(r) = U(ro) + \int_{ro}^{r} V \, dr$$

Vereinfacht für geradlinig:

$$U(x,y,z) = [U(x_o,y_o,z_o) + \int_{x_o}^{x} V_x(x,y_o,z_o)\,dy + \int_{y_o}^{y} V_y(x,y,z_o)\,dy$$

$$+ \int_{z_o}^{z} V_z(x,y,z)\,dz \ ] * (-1)$$

Die Flächenspannung wird in diesem Fall in N/m angegeben. Entlang der Formnestbeschichtung findet also nur eine zweidimensionale Flächenspannung ihre Akzeptanz.
So wirkt das U (x, y, z) E-Potential (Volt) als Antriebsmotor für die Flächenspannung zwischen Formnestbeschichtung und Polyurethananteil (ca. 0,03 N/m), wie z.B. zwischen Quecksilber und Öl, wodurch dieser Wert eine definierte Trennung existenzialisiert. In diesem Falle steht das Quecksilber für die Formenbeschichtung und das Öl für das Polyurethansystem. Die elektrophysikalischen Parameter sind somit gut vergleichbar.

$$\text{Somit gilt } e = \frac{U(x,y,z) * P}{V(x,y,z)_{xyz}} = \frac{Emax * P}{V} \rightarrow Emax = \frac{e * V}{P}$$

Erklärung:

e:           Flächenspannung (N/m)
$U(x,y,z)$ :    E-Potential - hier $E_{max}$ Volt oder $\frac{kg * gm}{A * sec^3}$
P:           Elektrisches Dipolmoment [m*A*sec]
$V(x,y,z)$:    Volumen des durch die Beschichtung umschlossenen Raums ($m^3$)

Für P wird Dielektrikum eingesetzt

Werte für P:    - A: max 30 [µA] (bei den Schäumversuchen ermittelter und erprobter Micro-Ampère Parameter-Wert)
                - m: ca. 0,5 [m]
                - sec: ca. 5 -30 [sec]

Die Wirkung der Flachspannung wird in Fig. 5 dargestellt. Dort ist eine jeweils gleiche Prüfflüssigkeit 10, z.

B. Öl auf einer erfindungsgemäßen Beschichtung 8 mit unterschiedlichem E-Potential, nämlich bei a.) Emax, b.) Ei und c.) Emin dargestellt. Gut zu erkennen ist hierbei die Tropfenbildung bei E-max, die mit abnehmendem E-Potential ebenfalls abnimmt.

Die Möglichkeiten, das E-Potential neu anzuregen, werden im folgenden beschrieben.

Die erste Möglichkeit besteht darin, die Galvanoschicht abzubeizen und anschließend neu zu galvanisieren, was jedoch mit einem sehr hohen Aufwand verbunden ist. Ziel ist Emax wiederherzustellen.

Als zweite Möglichkeit kann die Galvanoschicht mechanisch mit einer Rotationsscheibe und Gleitmittel gerieben werden, wobei beispielsweise eine Rotationsscheibe aus Textil oder Fell verwendet wird (durch kinetische Energie wird E1-Potential auf E-max aufgebaut). Die Häufigkeit der Reibung hängt von der Stärke des oben beschriebenen Energieabbaues ab. Diese Möglichkeit erfordert zwar nur einen geringen Materialaufwand, ist jedoch schlecht automatisierbar und erfordert somit Personal.

Als dritte Möglichkeit bietet es sich an, die Oberfläche des Formwerkzeuges mittels ionisierten Gasen oder Gasgemischen, insbesondere ionisierter Luft wiederanzuregen. Ionisierte Luft kann in einer Hochspannungsanlage erzeugt werden, wobei Luft beispielsweise in einer 50 kV Hochspannungsanlage beim Durchströmen positiv aufgeladen und auf ca. 30 bis 90 °C erwärmt wird. Die so aufbereitete Luft wird mit ca. 4 bis 6 bar vor dem Einschäumen in das Formwerkzeug bzw. auf dessen Oberfläche aufgebracht. Um den Potentialaufbau im Formnest zu erleichtern, kann die Luft mit einem ca. 3 %igen Dielektrikum (z.B. auf pflanzlicher Basis, wie Paraffinöl oder Rizinusöl oder aber Silikonöl) angereichert werden. Diese Vorgehensweise ist vollständig und leicht automatisierbar, bringt einen geringen Energieverbrauch mit sich und führt zu einer leichten Teilentnahme. Nachteilig ist lediglich, daß ein Einbau in die Schäumanlage erforderlich ist.

EAnlage $\geq$ E Verlust

Das ionisierte Gas, bzw. hier die ionisierte Luft werden je nach Formgröße während ca. 3 bis 30 Sekunden in das Werkzeug eingeblasen, was etwa nach jedem dritten Schuß erfolgen muß.

Als vierte Möglichkeit bietet es sich an, das Dielektrikum direkt in die A-Komponente des Schaumsystems, z.B. in die A-Komponente eines Polyurethansystems als Rezepturbestandteil einzumischen. Durch die auf maximal 8 % beschränkte Beimischung wird der Energieabbau durch den verhinderten Ladungsaustausch zwischen Formwerkzeug und Schaumteilfläche vermindert bzw. abgebrochen und Ez erhöht. Für einen störungsfreien Betrieb muß der Ladungsaustausch zu 90 bis 95 % verhindert werden. Die Anwendung ist sehr leicht, jedoch vermindern niedrige pH-Werte und hohe Wasseranteile in den Schaumsystemen den Wirkungsgrad der Dielektrikamittel. Die physikalischen Werte des Formschaumteils können verschlechtert werden.

Durch die sehr dichte Kristallstruktur der Beschichtung und die Anregung der Oberfläche des Formwerkzeuges werden ein Eindringen der Schaumstoffkomponenten in die Oberfläche des Formwerkzeuges und eine dort stattfindende Vernetzung wirksam verhindert. Die Entnahme der Formschaumteile ist dadurch unproblematisch. Die reagierenden PU-Moleküle rutschen über die "Mikro-Riefen" der Kristallstruktur der Beschichtungsoberfläche.

Die vorstehende Erfindung eignet sich besonders zur Verwendung bei der Herstellung von Polyurethan-Formschaumteilen mit allen bisher bekannten Schaumsystemen wie RIM-, Integral-, Weich- oder Hartschaumteilen. Überall dortwo eingesetzte reagierende Medien sich mit einer Berührungsoberfläche homogen verbinden wollen (z.B. Spanplatten-Herstellung usw.) kann die Erfindung ebenfalls eingesetzt werden.

**Patentansprüche**

1. Verfahren zum Herstellen eines Formschaumteils in einem Formwerkzeug, wobei ein Formwerkzeug verwendet wird, dessen formgebende Oberflächen mit einer Antihaftbeschichtung in Form einer Galvanoschicht versehen sind, **gekennzeichnet durch** die folgenden Verfahrensschritte:

   • ein Strom eines ionisierten Gases oder Gasgemisches wird erzeugt und in das Formwerkzeug eingeblasen;
   • der zum Formschaumteil führende Reaktionsprozeß wird in dem Formwerkzeug durchgeführt;
   • das fertige Formschaumteil wird entnommen.

2. Verfahren gemäß Anspruch 1, **dadurch gekennzeichnet, daß** als ionisiertes Gasgemisch positiv aufgeladene Luft von ca. 30 bis 90°C verwendet wird, die mit ca. 4 bis 6 bar in das Formwerkzeug eingeblasen wird.

3. Verfahren gemäß Anspruch 1 oder 2, **dadurch gekennzeichnet, daß** zur Erleichterung des Ladungsaustausches das Gas bzw. das Gasgemisch mit einem Dielektrikum angereichert wird.

**4.** Verfahren gemäß Anspruch 1 oder 2, **dadurch gekennzeichnet, daß** zur Erleichterung des Ladungsaustausches die Komponenten für die Formschaumteilbildung mit einem Dielektrikum angereichert werden.

**Claims**

**1.** Process for the production of a moulded foam article in a moulding die, in which a moulding die is used whose moulding surfaces are provided with an adhesion-resistant coating in the form of an electroplated layer, **characterised by** the following process steps:

- a stream of an ionised gas or gas mixture is produced and blown into the moulding die;
- the reaction process that produces the moulded foam article takes place in the moulding die;
- the finished moulded foam article is extracted.

**2.** Process according to Claim 1,
**characterised in that**
the ionised gas mixture used is positively charged air at about 30° to 90°, which is blown into the moulding die at about 4 to 6 bar.

**3.** Process according to Claims 1 or 2,
**characterised in that**
to facilitate charge exchange the gas or gas mixture is enriched with a dielectric.

**4.** Process according to Claims 1 or 2,
**characterised in that**
to facilitate charge exchange the components for forming the moulded foam article are enriched with a dielectric.

**Revendications**

**1.** Procédé de production d'une pièce en mousse moulée dans un outil de moulage, dans lequel on emploie un outil de moulage dont les surfaces donnant la forme de la pièce présentent un revêtement anti-adhérence sous forme d'une couche galvanique, **caractérisé par** les pas de procédé suivants :

- on produit un flux d'un gaz ou d'un mélange de gaz ionisé et on le souffle dans l'outil de moulage ;
- on exécute dans l'outil de moulage le processus de réaction conduisant à la pièce en mousse moulée ;
- on démoule la pièce en mousse moulée finie.

**2.** Procédé selon la revendication 1, **caractérisé par le fait que** comme mélange de gaz ionisé on emploie de l'air chargé positivement à une température d'environ 30 à 90°C que l'on souffle dans l'outil de moulage sous une pression d'environ 4 à 6 bars.

**3.** Procédé selon la revendication 1 ou 2, **caractérisé par le fait que** pour faciliter l'échange de charge on enrichit avec un diélectrique le gaz ou le mélange de gaz.

**4.** Procédé selon la revendication 1 ou 2, **caractérisé par le fait que** pour faciliter l'échange de charge on enrichit avec un diélectrique les composants prévus pour la formation de la pièce en mousse moulée.

Fig. 1

Fig. 2

## Fig. 3

## Fig. 4

E-Potential

Emax
E₁

Emin

0    1                                    2    3    4    Zeit für eine Schäumung

## Fig. 5

a)                          b)                          c)

Emax                        E₁                          Emin

8      10                   8      10                   8      10